# EUROPÄISCHE PATENTSCHRIFT

(11) **EP 0 591 715 B1**
(45) Veröffentlichungstag und Bekanntmachung des Hinweises auf die Patenterteilung: **13.03.1996**
(21) Anmeldenummer: 93114782.1
(22) Anmeldetag: 15.09.1993
(51) Int. Cl.: B62D 21/12, B60R 19/02, B62D 65/00

(54) **Nutzfahrzeug, insbesondere Frontlenker-Lastkraftwagen**
Industrial vehicle, especially lorry with forward-mounted cab
Véhicule utilitaire, en particulier camion avec cabine à l'avant

(30) Priorität: 09.10.1992 DE 4234120
(43) Veröffentlichungstag der Anmeldung: 13.04.1994
(73) Patentinhaber: MAN Nutzfahrzeuge Aktiengesellschaft, D-80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- DE-A- 2 039 309
- DE-A- 2 117 414
- DE-A- 2 714 017
- DE-A- 2 930 036
- DE-A- 3 151 280
- DE-A- 3 312 446
- DE-A- 4 112 372
- FR-A- 659 850
- FR-A- 2 214 281
- FR-A- 2 308 539
- FR-A- 2 453 755
- FR-A- 2 667 839
- US-A- 1 894 602

## Beschreibung

Die Erfindung betrifft einen Lastkraftwagen, insbesondere der Frontlenker-Bauart, mit Merkmalen der im Oberbegriff des Anspruchs 1 angegebenen Art.

Die Erfindung geht aus von einem Lastkraftwagen gemäß der FR-A-26 67 839. Bei diesem der Fachwelt auf der IAA 1992 unter der Bezeichnung SLW 2000 als Prototyp vorgestellten Lastkraftwagen handelt es sich um einen solchen, der dem Triebkopfprinzip gehorcht. Der Triebkopf bildet dabei den ersten vorderen Modul, der aus dem wie im Oberbegriff des Anspruches 1 angegebenen Teilen besteht. Dem Triebkopfkonzept immanent ist, daß dessen Antriebsaggregat nur die Vorderachse antreibt, die am Restfahrgestell angeordnete Hinterachse dagegen nicht angetrieben ist. Dieses Triebkopfkonzept kam bisher nur für leichte Nutzfahrzeuge, insbesondere Verteilerfahrzeuge zur Anwendung, nicht aber bei schweren Nutzfahrzeugen, die regelmäßig über einen Hinterachsantrieb verfügen.

Rein der Vollständigkeit wegen sei auch noch auf den Stand der Technik gemäß der DE-A-27 14 017 verwiesen. Hieraus ist ein dreiteiliges Fahrgestell eines Omnibus bekannt, wobei das Mittelteil speziell als Rahmen für einen Kofferaufnahmeraum und das Hinterteil zur Aufnahme eines Antriebsaggregates ausgebildet sind. Ein Omnibus ist zwar an sich auch Nutzfahrzeugen zuzurechnen, wird aber üblicherweise eher als Fahrzeug zur Fahrgast- oder Personenbeförderung bezeichnet. Als Nutzfahrzeug wird in der Regel ein solches bezeichnet, das auf einem Lkw-Fahrgestell basierend durch die verschiedensten Auf- und Anbauten ergänzt, speziellen Einsatzzwecken angepaßt wird.

Für jede Gattung von solchen Fahrzeugen, einerseits Omnibussen, andrerseits Lkw als Nutzfahrzeugen, galten bisher und gelten nach wie vor spezielle Kriterien der Ausgestaltung des zugehörigen Fahrgestells. Omnibusfahrgestelle gehorchen den fahrgastspezifischen Erfordernissen der Personenbeförderung, Lkw-Fahrgestelle dagegen dem spezifischen Einsatzzweck des Nutzfahrzeuges.

Es ist der Anmelderin kein Fall bekannt, daß ein Fachmann jemals auf den Gedanken gekommen wäre, ein Omnibus-Fahrgestell als Basis zur Bildung eines Lastkraftwagen, insbesondere der Frontlenker-Bauart, heranzuziehen. Insofern ist die Lehre der DE-A-27 14 017 nicht in naheliegender Weise auf einen Lastkraftwagen übertragbar.

Normale Lastkraftwagen weisen unabhängig von ihren speziellen Einsatzzwecken generell ein Fahrgestell auf, dessen Rahmen aus zwei von vorn nach hinten durchgängigen und mit ihrer Oberkante in einer Ebene liegenden Längsträgern besteht, die über mehrere Querträger verbunden sind. Dieser Rahmen wird in der Regel vorgefertigt und dann während der Bandmontage mit den übrigen Komponenten des Fahrzeuges vervollständigt. Diese Herstellungsweise eines Nutzfahrzeuges bestimmt die anlagenmäßige und personelle Ausstattung des Endmontagebandes.

Der Erfindung liegtdemgegenüber die Aufgabe zugrunde, einen Lastkraftwagen der eingangs genannten Art dahingehend auszugestalten, daß eine noch flexiblere Anpassung an verschiedenste Typen und Einsatzzwecke möglich und außerdem eine Fahrzeugendmontage in kürzerer Zeit mit weniger Personal durchführbar ist.

Diese Aufgabe ist bei einem Lastkraftwagen der gattungsgemäßen Art erfindungsgemäß durch die im Kennzeichen des Anspruches 1 angegebenen Merkmale gelöst.

Vorteilhafte Ausgestaltungen dieser Lösung sind in den Unteransprüchen angegeben.

Durch den modularen Aufbau des Fahrgestells aus drei einzeln zumindest weitestgehend vormontierbaren und dann zusammensetzbaren Modulen, von denen der erste im wesentlichen aus dem Fahrgestell-/Rahmen-Vorderteil mit Vorderachse(n), Antriebsaggregat, Fahrerhaus, der zweite aus einem Fahrgestell-/Rahmen-Mittelteil mit Kraftstoff- und Druckluftbehältern sowie weiteren Anbauteilen, und der dritte aus einem Fahrgestell-/Rahmen-Hinterteil mit Hinterachse(n) und anderen Anbaukomponenten besteht, ist es möglich geworden, zumindest den mittleren und hinteren Modul des Nutzfahrzeuges außerhalb des Endmontagebandes vorzufertigen und vorzumontieren sowie dann diese jeweils fertigen Module der Band-Endmontage zuzuführen. Auch wenn für diese beiden Module jeweils ein eigenes kleineres Montageband benötigt wird, so erlaubt dies jedoch eine wesentlich höhere Montagedichte bei kürzeren Einzelteilzuführwegen und mit speziell hierfür eingesetztem Montage-Personal. Für die Zusammenfügung der drei Module am eigentlichen Endmontageband sind dann zum einen weniger Personal und zum anderen auch weniger qualifiziertes Personal erforderlich. Außerdem ermöglicht diese Dreiteilung des Nutzfahrzeuges eine äußerst flexible Anpassung hinsichtlich der Gestaltung der drei Module an die unterschiedlichsten Typen bzw. Einsatzzwecke.

Nachstehend ist die erfindungsgemäße Lösung anhand mehrerer in der Zeichnung dargestellter Ausführungsbeispiele noch näher erläutert. In der Zeichnung zeigen:
- Fig. 1 bis 6: jeweils in schematisierter Seitenansicht ein Nutzfahrzeug der Frontlenker-Bauart (ohne Auf- und Anbauten) entsprechend dem erfindungsgemäßen Bauprinzip,
- Fig. 7 und 8: je eine schematisierte Draufsicht auf den Heckbereich des Fahrzeuges, mit einem Fahrgestell-/Rahmen-Hinterteil, das bei den Fahrzeugen gemäß Fig. 1 bis 5 zur Anwendung kommt,
- Fig. 9 und 10: je eine schematisierte Draufsicht auf einen Heckbereich des Fahrzeuges, so wie er bei einem Fahrzeug gemaß Fig. 6 zur Anwendung kommen kann,
- Fig. 11: einen schematisierten Querschnitt durch das Fahrzeug gemäß Fig. 5 oder 6 im Bereich des Ersatzrades,
- Fig. 12 bis 15: je eine Ausführungsform der Querträger-Verbindungen im Fahrgestell-/Rahmen-Mittelteil bei den Fahrzeugen gemäß Fig. 2 bis 6,
- Fig. 16 bis 18: je eine Ausführungsform für den Anschluß von Organen für einen seitlichen Unterfahrschutz an Nutzfahrzeugen gemäß den Ausführungsformen von Fig. 3 bis 6.

In den Figuren sind gleiche bzw. einander entsprechende Bauteile mit gleichen Bezugszeichen angezogen.

Bei dem Nutzfahrzeug kann es sich um einen Lastkraftwagen jeglicher Bau- und Einsatzart handeln. Die Basis bildet somit ein Lastkraftwagen der Frontlenker- oder Hauber-Bauart, auf dessen Fahrgestell je nach Einsatzzweck die entsprechenden Auf- und/oder Anbauten angebracht sind.

Entsprechend dem erfindungsgemäßen Bauprinzip gehorcht das Nutzfahrzeug einem modularen Aufbau. Es setzt sich aus drei, einzeln zumindest weitestgehend vormontierbaren und dann zusammensetzbaren Modulen 1, 2, 3 zusammen. Der erste Modul 1 besteht aus einem Fahrgestell-/Rahmen-Vorderteil 4 mit Vorderachse(n) 5, Antriebsaggregat 6, Fahrerhaus 7 und sonstigen in diesem Fahrzeugvorderbereich üblicherweise gegebenen Aggregaten bzw. Anbauteilen, wie Lenkgetriebe, Kühler/Lüfter, Einstiege, Kotflügel, Stoßfänger und dergleichen. Das Antriebsaggregat 6 ist zwischen den beiden Rahmen-Längsträgern, getragen von diesen, eingebaut. Das Fahrerhaus 7 wird vom Rahmen über vordere Lagerböcke 8 und hintere Lagerböcke 9 getragen.

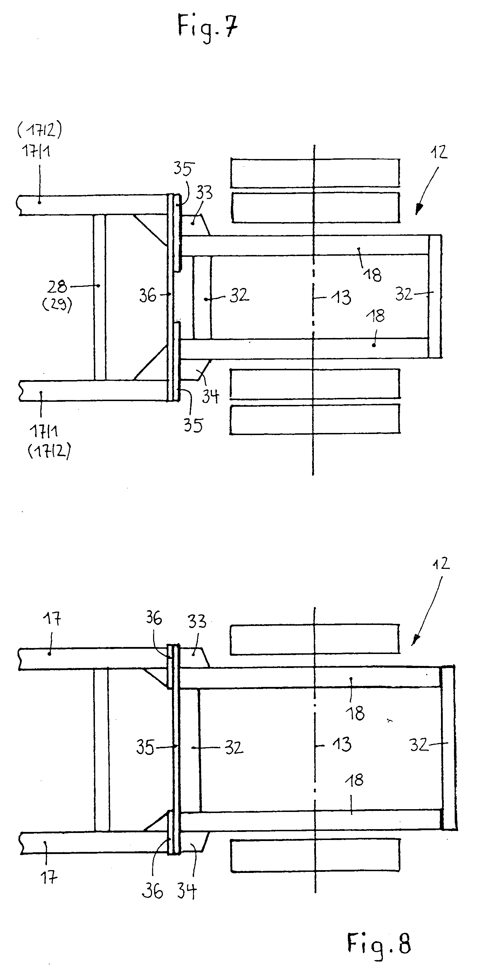

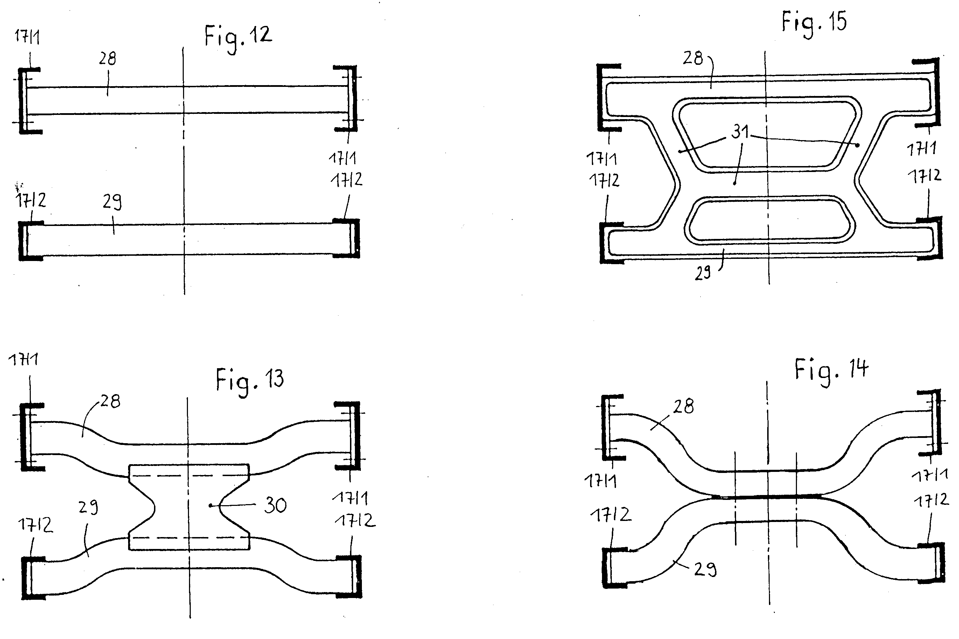

Der zweite Modul 2 besteht aus dem Fahrgestell-/Rahmen-Mittelteil 10 und in diesem Mittelabschnitt des Fahrzeuges üblicherweise angeordneten Komponenten/Anbauteilen 11 wie Kraftstoff- und Druckluftbehälter, Batteriekästen, Staukästen, Verteilergetriebe und dergleichen, die der Übersichtlichkeit wegen nur in Fig. 7 und 13 dargestellt sind.

Der dritte Modul 3 besteht aus einem Fahrgestell-/Rahmen-Hinterteil 12 mit Hinterachse(n) 13 und weiteren dort üblicherweise angeordneten Anbaukomponenten.

Jeder der Module 1, 2, 3 wird separat aus vorgefertigten Einzelteilen vormontiert und dann mit den anderen Modulen verbunden, wobei die einzelnen Rahmenabschnitte vorzugsweise über Schraub- oder Nietverbindungen aneinander angeschlossen werden. Die betreffenden Schnitt- bzw. Anschlußstellen sind in der Zeichnung zwischen erstem (1) und zweitem Modul 2 mit 14 und zwischen zweitem (2) und drittem Modul 3 mit 15 bezeichnet.

Unabhängig von seiner modularen Bauweise kann der Rahmen des Nutzfahrzeugs den verschiedensten Typen bzw. Einsatzzwecken desselben nach unterschiedlichen Bauprinzipien gestaltet sein, auf die nachfolgend anhand der einzelnen Figuren Bezug genommen ist.

Grundsätzlich weist das Nutzfahrzeug ein Fahrgestell auf, dessen Rahmen im endmontierten Zustand aus zwei bauartgleichen, über Querträger miteinander verbundenen Längsträgern besteht, die jedoch - dem modularen Bauprinzip gehorchend - der Länge nach in jeweils drei Abschnitte, nämlich einen vorderen Abschnitt 16, einen mittleren Abschnitt 17 bzw. 17/1, 17/2 und einen hinteren Abschnitt 18 unterteilt sind.

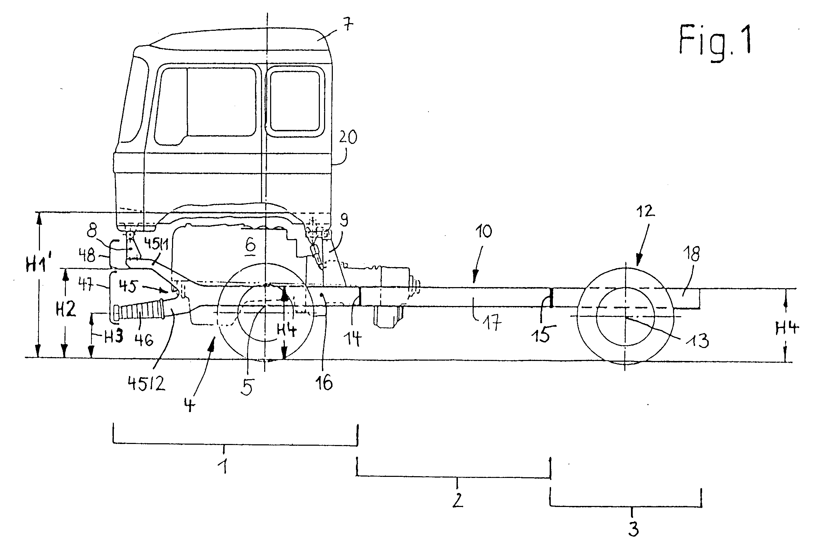

Im Fall gemäß Fig. 1 sind die Längsträger-Abschnitte 16, 17, 18 durch im wesentlichen gerade und in einer Horizontalebene liegende Trägerteile gebildet, die jeweils über nicht dargestellte Querträger miteinander verbunden sind. Die beiden einander gegenüberliegenden Träger-Teile des vorderen Längsträger-Abschnittes 16 können im Bereich des Antriebsaggregates 6, soweit dessen Einbau es erforderlich macht, einen größeren Abstand haben als die Träger-Teile im mittleren und hinteren Abschnitt 17, 18 und darüber hinaus - zur Bildung eines V-förmigen Einbaubereiches für das Antriebsaggregat 6 - auch in sich von der Vertikalen abweichend schräg gestellt sowie zum direkten Anschluß von Achs- bzw. Einzelradaufhängungsorganen mit entsprechenden Aus- und Einbuchtungen versehen sein. Vorzugsweise sind die Träger-Teile der Längsträger-Abschnitte 16, 17, 18 im Fall gemäß Fig. 1 in einer tiefer gelegten Ebene angeordnet, deren Höhen-Niveau H4 zwischen Fahrbahn und Rahmenoberkante etwa auf demjenigen H3 einer Pkw-Stoßstange oder geringfügig darüber liegt. Ein solchermaßen abgesenkter Rahmen ermöglicht im Vergleich zu herkömmlichen Anordnungen eine Tieferlegung des Antriebsaggregates 6 ebenso wie des Fahrerhauses 7 mit der Folge einer besseren Einstiegsmöglichkeit in letzteres. Der Abstand zwischen Fahrbahn und Boden des tiefergelegten Fahrerhauses ist in der Zeichnung mit H1' angegeben.

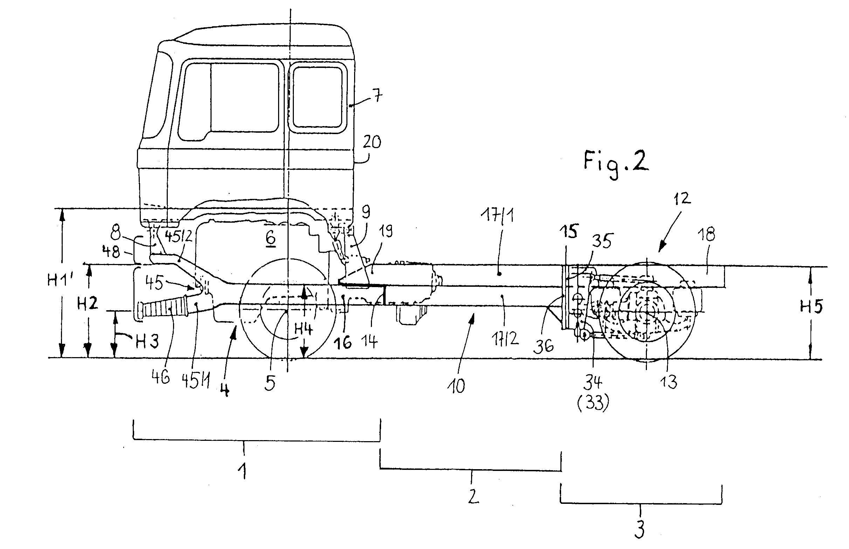

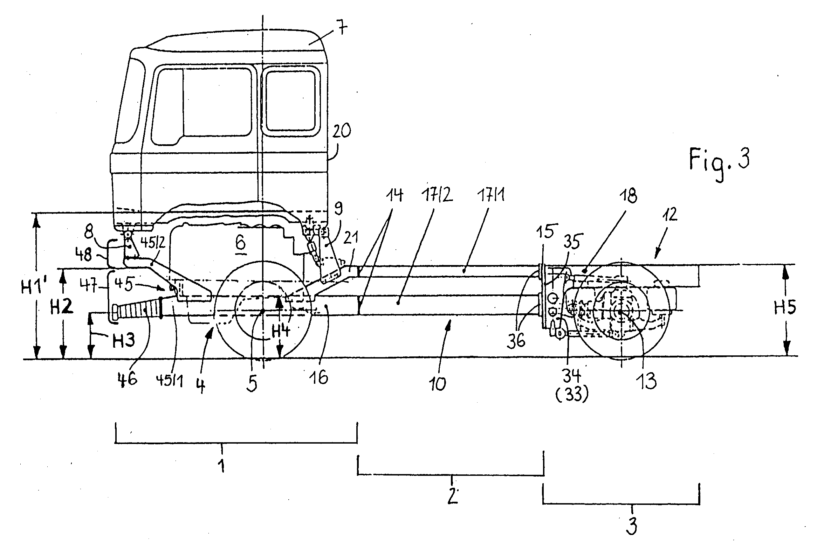

Bei den Nutzfahrzeugen gemäß den Fig. 2 bis 6 ist ein anderes Rahmen-Konzept vorgesehen, dahingehend, daß der Rahmen im vorderen Modul 1 aus wie im Fall gemäß Fig. 1 auf die Höhe H4 abgesenkten und entsprechend gestalteten vorderen Längsträger-Abschnitten 16 für eine abgesenkte Anordnung des Antriebsaggregates 6 und Fahrerhauses 7, jedoch mittleren Längsträger-Abschnitten besteht, die jeweils in ein oberes Längsträger-Teil 17/1 und ein unteres Längsträger-Teil 17/2 aufgelöst sind. Die je Fahrzeugseite beiden Teile 17/1, 17/2 der Längsträger-Mittelabschnitte sind dabei übereinander in Längsrichtung im wesentlichen parallel verlaufend ohne bzw. mit geringem Abstand (siehe Fig. 2) oder mit größerem Abstand angeordnet (siehe Fig. 3 bis 6).

Die beiden jeweils oberen Träger-Teile 17/1 und beiden jeweils unteren Träger-Teile 17/2 sind über Querträger miteinander verbunden, Beispiele hierfür sind in den Fig. 12 bis 15 angegeben und weiter hinten noch näher erläutert.

Im Fall der Ausführungsbeispiele gemäß Fig. 2 und 3 sind die beiden jeweils unteren Träger-Teile 17/2 in Verlängerung der im vorderen Modul 1 gegebenen Längsträger-Teile 16 und zusammen mit diesen in einertiefer gelegten Ebene angeordnet, deren Höhen-Niveau H4 zwischen Fahrbahn und Oberkante aufdemjenigen H3 einer Pkw-Stoßstange oder geringfügig darüber liegt. Die beiden oberen Träger-Teile 17/1 des mittleren Längsträger-Abschnittes 17 dagegen liegen mit ihren Oberkanten nicht nur bei diesen beiden Ausführungsbeispielen, sondern auch bei den anderen Ausführungsbeispielen generell auf einem Höhen-Niveau H5, das demjenigen eines herkömmlichen Nutzfahrzeuges entspricht. Das Maß H4 entspricht dabei etwa 0,6-0,9 H5.

Im Fall gemäß Fig. 2 verlaufen die beiden Träger-Teile 17/1, 17/2 je Seite ohne Abstand parallel übereinander. Außerdem überragt das jeweils obere Träger-Teil 17/1 das jeweilig untere Träger-Teil 17/2 vorne um ein gewisses Stück, welcher Trägerteil-Abschnitt 19 vorne abgeschrägt ist und bei Verbindung der beiden Module 1 und 2 das jeweils im vorderen Modul 1 gegebene Träger-Teil 16 oben überlappt und dort an diesem befestigt wird.

Beim Ausführungsbeispiel gemäß Fig. 3 dagegen verlaufen die beiden Träger-Teile 17/1, 17/2 je Seite mit größerem Abstand parallel übereinander. Außerdem ist etwa in Höhe der Fahrerhaus-Rückwand 20 am Längsträger-Abschnitt 16 des vorderen Moduls 1 ein schräg nach oben abragendes Träger-Teil 21 angesetzt, an dem sich bei Zusammenfügen der Module 1 und 2 das jeweils obere Träger-Teil 17/1 des mittleren Moduls 2 anschließt.

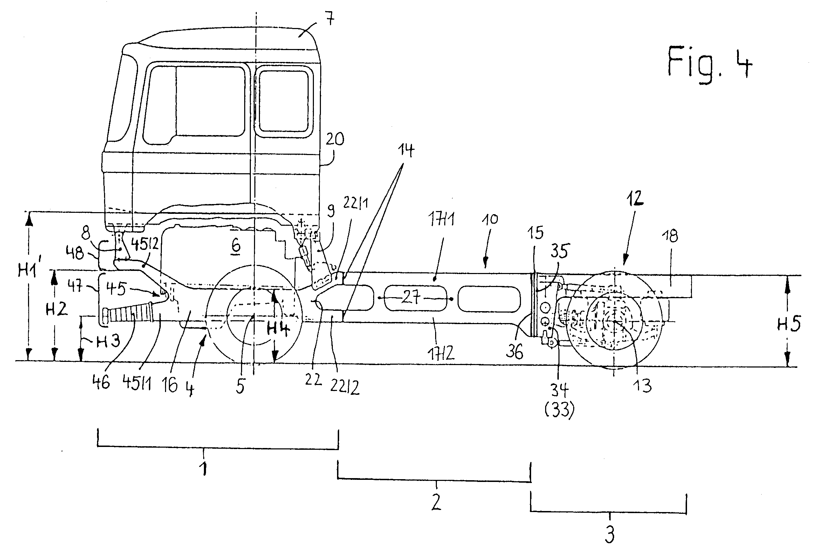

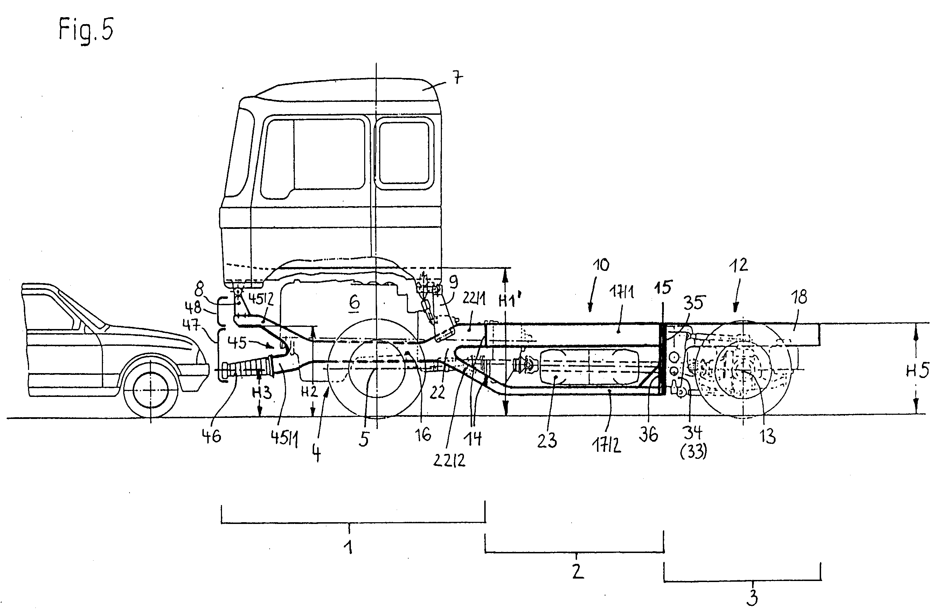

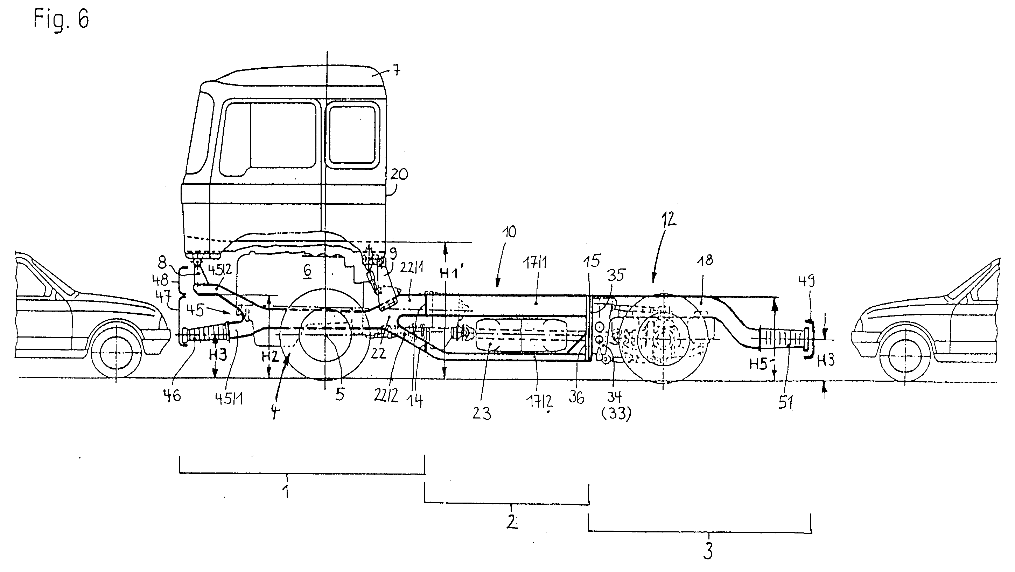

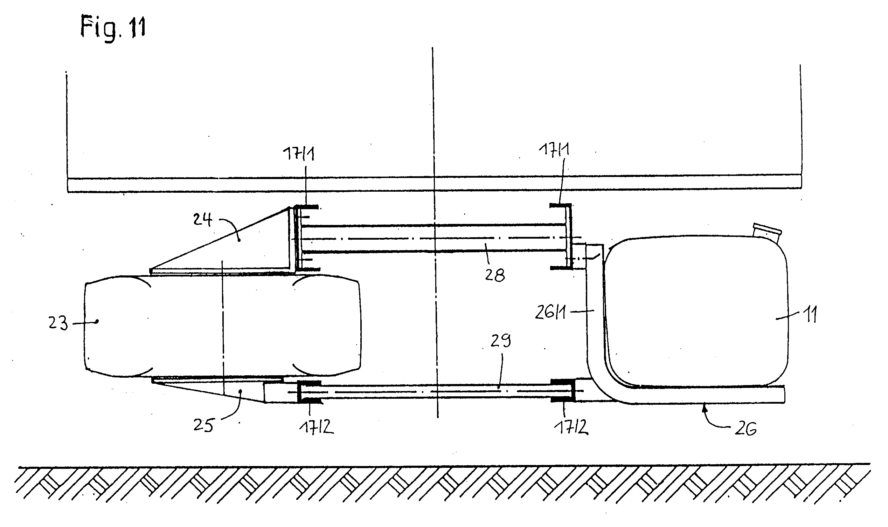

Demgegenüber abgewandelte Ausführungsformen sind aus Fig. 4 bis 6 ersichtlich. Dabei weist jeder der beiden auf das Höhen-Niveau H4 abgesenkten Längsträger-Abschnitte 16 des vorderen Moduls 1 an seinem hinteren Ende eine einstückig mit ihm ausgebildete Vertikal-Gabelung 22 auf, wobei sich bei Zusammenfügen der beiden Module 1 und 2 an dessem oberen Gabel-Teil 22/1 das obere Träger-Teil 17/1 und an dessem unteren Gabel-Teil 22/2 das untere Träger-Teil 17/2 des mittleren Moduls 2 anschließt. Bei den Ausführungsbeispielen gemäß Fig. 5 und 6 ist dabei ein unteres Träger-Teil 17/2 des mittleren Moduls 1 soweit nach unten verlegt, daß zwischen diesem und dem zugehörigen oberem Träger-Teil 17/1 ein Ersatzrad 23 quer einbaubar ist. Hierfür ist am mittleren Modul 2, wie aus Fig. 11 ersichtlich, wenigstens eine, außen an einem der Träger-Teile 17/1, 17/2 angeflanschte Konsole 24, 25 gegeben, die mit einem Schlitten zum Quereinschieben und -ausziehen sowie das Heben und Absenken bzw. Montieren und Demontieren des Ersatzrades 23 unterstützenden Mechanismen ausgestattet sein kann. Wie ebenfalls aus Fig. 11 ersichtlich, sind an den beiden gegenüberliegenden Träger-Teilen 17/1, 17/2 außen Winkelhalter 26 mit ihren Vertikalschenkeln 26/1 sehr günstig abgestützt angebracht, vorzugsweise angeschraubt, die als Träger für Fahrzeugteile 11 wie Kraftstoff- und/oder Druckluftbehälter, Staukästen, Batteriekästen und dergleichen dienen.

Zur Erhöhung der Biegesteifigkeit können die beiden, je Seite jeweils übereinander angeordneten Träger-Teile 17/1, 17/2 des mittleren Moduls 2 auch noch durch wenigstens eine Strebe 27 miteinander verbunden sein, was beispielhaft in Fig. 4 dargestellt ist. In diesem Fall sind die beiden Teile 17/1, 17/2 einschließlich der Streben 27 als einstückiges Blechpreßteil realisiert. Alternativ hierzu wäre jedoch auch eine Schweißkonstruktion aus einzeln vorgefertigten Teilen möglich.

Unabhängig von ihrer jeweiligen Anordnung können die beiden je Seite gegebenen Träger-Teile 17/1, 17/2 des mittleren Moduls 2 entweder den gleichen Querschnitt oder unterschiedliche Querschnitte aufweisen, wobei das querschnittsstärkere wahlweise das untere oder obere sein kann.

Die beiden je Seite gegebenen Träger-Teile 17/1, 17/2 des mittleren Moduls 2 sind generell über an geeigneten Stellen angebrachte Querträger miteinander verbunden. Die Fig. 12 bis 15 zeigen hierfür verschiedene Querträger-Konstruktionen auf. Dabei können zur Verbindung der jeweils oberen Träger-Teile 17/1 und jeweils unteren Träger-Teile 17/2 gerade oder gekröpfte, gegebenenfalls endseitig mit Anschlußflanschen bestückte Querträger 28, 29 vorgesehen sein, die nicht (siehe Fig. 12) oder über ein Zwischenstück 30 (siehe Fig. 13) oder mittig aneinander anliegend direkt (siehe Fig. 14) miteinander verbunden sind und an denen die besagten Träger-Teile 17/1 bzw. 17/2 jeweils endseitig angeschraubt, angenietet oder angeschweißt sind. Bei der Ausführungsform gemäß Fig. 15 sind die Querträger 28, 29 zusammen mit diese verbindenden Verstrebungen 31 durch ein Blechpreßteil realisiert, an das die besagten Träger-Teile 17/1 bzw. 17/2 entweder angeschraubt, angenietet oder angeschweißt sind.

Bedingt durch die Auflösung in je Seite ein jeweils oberes und unteres Träger-Teil 17/1 bzw. 17/2 ist in Verbindung mit den besagten Querträgern 28, 29 im mittleren Modul 2 ein Rahmen-Abschnitt darstellbar, mit einer im Ergebnis sehr hohen Biegesteifigkeit bei gleichzeitig geringerem Gewicht und geringerem Materialeinsatz als bei bekannten Rahmen-Konstruktionen.

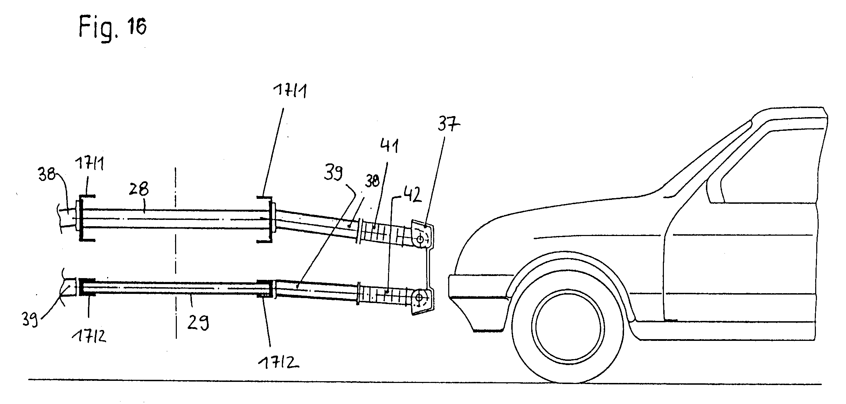

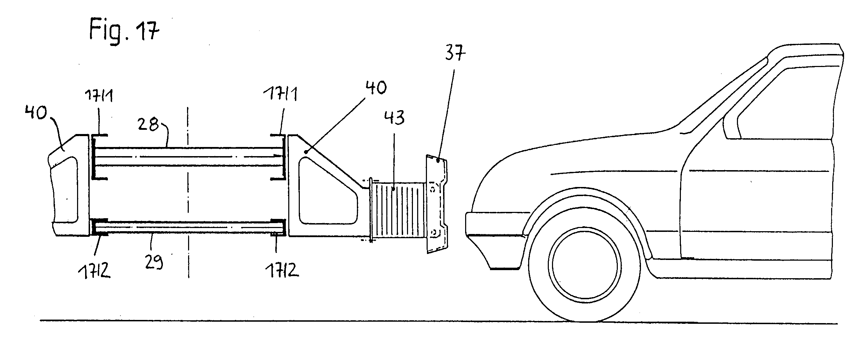

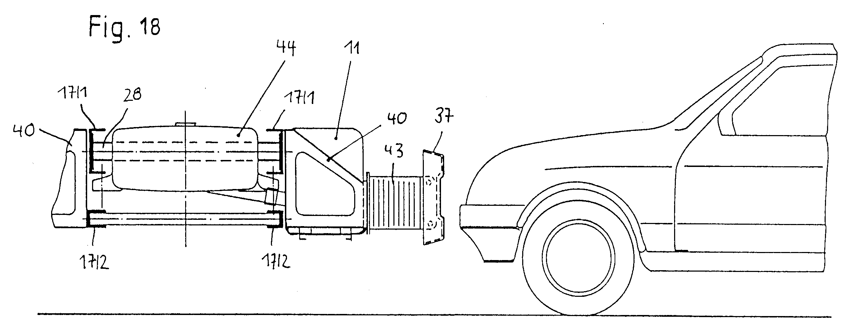

Die Auflösung des jeweiligen mittleren Längsträger-Abschnittes 17 in je Seite jeweils ein oberes und ein unteres Träger-Teil 17/1 bzw. 17/2, wie bei den Ausführungsbeispielen gemäß Fig. 2 bis 6 gegeben, eignet sich auch besonders gut für eine äußerst günstige Anordnung und Abstützung von dem seitlichen Unterfahrschutz dienenden Organen. Hierzu sind verschiedene Ausführungsbeispiele in den Fig. 16 bis 18 dargestellt. Dabei sind an den beiden Träger-Teilen 17/1, 17/2 je Seite des mittleren Moduls 2 seitliche Unterfahrschutzschilde 37 tragende Halter 38, 39 (Fig. 16) bzw. 40 (Fig. 17, 18) angebracht. In einer besonders sicheren Ausführungsform sind dabei die seitlichen Unterfahrschutzschilde 37 über quernachgiebige Energieabsorber 41, 42 (Fig. 16) bzw. 43 (Fig. 17, 18) an den Haltern 38, 39 bzw. 40 abgestützt. Dadurch ist ein Seitenaufprall eines Pkw, wie in den Fig. 16 bis 18 dargestellt, in diese seitliche Nutzfahrzeug-Knautschzone besonders günstig, weil energieverzehrend, abfangbar. Durch eine entsprechende Ausgestaltung der Halter 38; 39, 40 mit einer seitlich auskragenden Länge, die größer als die seitlich an den Träger-Teilen 17/1, 17/2 befestigten Fahrzeugteile 11 wie Kraftstoff- und/oder Druckluftbehälter, Batteriekästen, Staukästen und dergleichen ist, sind letztere bei einem seitlichen Aufprall eines Pkw auch relativ gut gegen etwaige Beschädigungen geschützt. Im übrigen macht die Gestaltung des Rahmens im mittleren Modul 2, wie aus Fig. 13 ersichtlich, eine besonders günstige, weil geschützte Unterbringung zusätzlicher Fahrzeugteile 44 wie Kraftstoff- und/oder Druckluftbehälter und anderer Bauteile im Bereich zwischen den beiden zweigeteilten mittleren Träger-Abschnitten möglich.

Darüberhinaus kann auch der vordere Modul 1 am vorderen Endbereich jedes der beiden vorderen Längsträger-Abschnitte 16 eine Vertikal-Gabelung 45 aufweisen, an deren unterem Gabel-Teil 45/1 vorne über einen oder mehrere in Höhe H3 einer Pkw-Stoßstange (siehe zum Beispiel Fig. 5) angeordnete(n) Energieabsorber 46 ein Stoßfänger 47 abgestützt ist. Das obere Gabel-Teil 45/2 dagegen endet in einer etwas über dem Normal-Niveau einer Pkw-Motorhaube (siehe zum Beispiel ebenfalls Fig. 5) gegebenen Höhe H2 und ist untenseitig so gestaltet, daß ein Pkw bei einer Frontalkollision in diese so gegebene, im übrigen bauteil-bzw. aggregatfreie oder zumindest bauteil- bzw. aggregatarme und dann nur mit längsweich (in Längsrichtung nachgiebig) am Rahmen befestigten Bauteilen bzw. Aggregaten ausgestattete vordere Nutzfahrzeug-Knautschzone eindringen kann, wobei durch den/die in Rahmen-Längsrichtung nachgiebigen Energieabsorber 46 die Energie verzehrbar ist.

Die Träger-Teile 17/1, 17/2 des mittleren Moduls 2 sind vorne und hinten jeweils mit Vorkehrungen, z. B. Flanschen oder Anschlußplatten versehen, die bei Zusammenfügung der drei Module 1, 2, 3 an entsprechenden Gegenstücken am hinteren Ende des vorderen Längsträger-Abschnittes 16 bzw. vorderen Ende des hinteren Längsträger-Abschnittes 18 in Anlagekontakt miteinander kommen und über Schraub- oder Nietverbindungen miteinander verbunden werden.

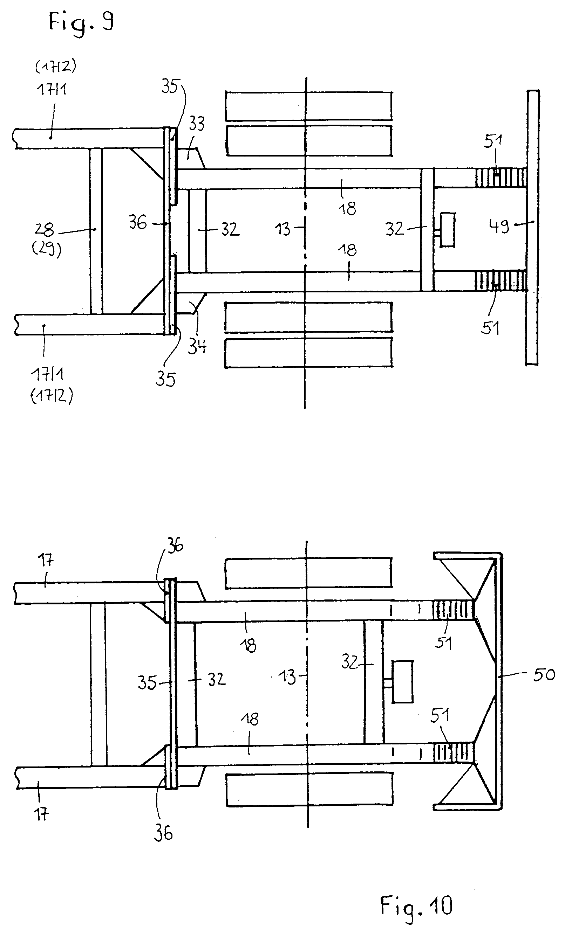

Das dem dritten Modul 3 zugehörige Fahrgestell-Hinterteil 12 umfaßt, wie auch gut aus den Fig. 7 bis 10 ersichtlich, die beiden hinteren Längsträger-Abschnitte 18, die durch wenigstens einen Querträger 32 miteinander verbunden sind. Für die Anlenkung von Hinterachsaufhängungsorganen sind außen an den Längsträger-Abschnitten 18 Lagerschilde 33, 34 angeordnet. Frontseitig der letzteren sowie der Längsträger-Teile 18 ist eine Anschlußplatte oder sind Anschlußflansche 35 gegeben, die beim Zusammenfügen der Module 2 und 3 an den am hinteren Ende des dem mittleren Modul 2 zugehörigen Rahmen-Mittelteils 10 gegebenen Anschlußorganen wie Anschlußflanschen oder einer Anschlußplatte 36 zur Anlage kommt bzw. kommen und über Schraub- oder Nietverbindungen verbunden wird/werden. Wie aus einem Vergleich von Fig. 7 mit Fig. 8 oder Fig. 9 mit 10 ersichtlich, läßt die modulare Bauweise des Nutzfahrzeuges im Bereich des das Fahrgestell-Hinterteil umfassenden hinteren Moduls 3 eine beliebige Längen-und Breitenvariation des dortigen Rahmenendes zu, was eine bestmögliche Anpassung an die unterschiedlichsten Nutzfahrzeugtypen und -einsatzzwecke oder unterschiedliche Achs- bzw. Rad-/Radsatz-Abstände ermöglicht. Zum Vergleich: Das Rahmenende gemäß Fig. 7 ist schmäler und kürzer als jenes gemäß Fig. 8, während das Rahmenende gemäß Fig. 9 schmäler und länger als jenes gemäß Fig. 10 ist.

Darüberhinaus kann auch das Nutzfahrzeugheck mit einer Knautschzone ähnlich wie frontseitig und seitlich ausgestattet sein. Dies ist aus Fig. 6 in Verbindung mit Fig. 9 oder 10 ersichtlich. Dabei sind die hinteren Enden der hinteren Längsträger-Abschnitte 18 bis auf Höhe H3 einer Pkw-Stoßstange (siehe Fig. 6) nach unten gezogen, durch Abkröpfen (siehe Fig. 6 und 10) oder Anschweißen (siehe Fig. 9) entsprechender Träger-Teile. Eine Rammschutzleiste 49 (siehe Fig. 9) oder eine das Heck aerodynamisch umgebende Verkleidungsblende 50 (siehe Fig. 10) sind dabei über wenigstens einen in Längsrichtung nachgiebigen, in Höhe H3 der Pkw-Stoßstange angeordneten Energieabsorber 51 an den hinteren Enden der heruntergezogenen Längsträger-Abschnitte 18 abgestützt. Bei einem Aufprall eines Pkw kann dieser somit in diese konstruktiv vorgegebene hintere Nutzfahrzeug-Knautschzone eindringen, wobei die Aufprall-Energie durch den/die Energieabsorber 51 verzehrt wird.

## Patentansprüche

1. Lastkraftwagen, insbesondere der Frontlenker-Bauart, mit einem Fahrgestell modularen Aufbaus, wobei der erste, vordere Modul (1) aus einem Fahrgestell-/Rahmen-Vorderteil (4) mit zwei über Querträger verbundenen Längsträger-Abschnitten (16) und daran angebaut Vorderachse(n) (5), Antriebsaggregat (6), Fahrerhaus (7) und sonstigen im Vorderbereich des Lastkraftwagen üblicherweise gegebenen Aggregaten/Anbauteilen besteht, an welchem vorderen Modul (1) sich das hintere Rest-Fahrgestell anschließt, das Behälter für Kraftstoff und Druckluft sowie weitere Komponenten trägt und mit Hinterachse(n) verbunden ist, wobei alle Fahrgestell-Module (1, 2, 3) des Lastkraftwagen jeweils für sich weitestgehend vormontierbar, dann zusammenstellbar und rahmenseitig über Schraub- oder Nietverbindungen miteinander verbunden sind, dadurch gekennzeichnet, daß auch das hintere Rest-Fahrgestell in zwei Module, einen mittleren (2) und einen hinteren (3), aufgeteilt ist, wobei
- der mittlere Modul (2) aus einem Fahrgestell-/Rahmen-Mittelteil (10) mit zwei über Querträger verbundenen Längsträger-Abschnitten (17) und daran angebaut Kraftstoff- und Druckluftbehältern (11, 44) sowie weiteren im Mittelabschnitt eines Lastkraftwagen üblicherweise gegebenen Komponenten/Anbauteilen besteht, und
- der hintere Modul (3) aus einem Fahrgestell-/Rahmen-Hinterteil (12) mit zwei über Querträger verbundenen Längsträger-Abschnitten (18) und daran angebaut Hinterachse(n) (13) und sonstigen im hinteren Abschnitt eines Lastkraftwagen üblicherweise gegebenen Anbaukomponenten besteht.

2. Lastkraftwagen nach Anspruch 1, dadurch gekennzeichnet, daß die Längsträger-Abschnitte (16, 17, 18) aller drei Module (1, 2, 3) mit ihren Oberkanten im wesentlichen in einer Ebene angeordnet sind.

3. Lastkraftwagen nach Anspruch 2, dadurch gekennzeichnet, daß die Längsträger-Abschnitte (16, 17, 18), um eine Tieferlegung des Antriebsaggregates (6) und Fahrerhauses (7) zu ermöglichen, in einer gegenüber herkömmlichen Lastkraftwagen tiefergelegten Ebene angeordnet sind, deren Höhen-Niveau (H4) zwischen Fahrbahn und Rahmenoberkante auf jenem (H3) einer Pkw-Stoßstange oder geringfügig darüber liegt.

4. Lastkraftwagen nach Anspruch 1, dadurch gekennzeichnet, daß jeder der beiden Längsträger-Abschnitte (17) des zweiten, mittleren Moduls (2) etwa ab der Fahrerhaus-Rückwand (20) in ein oberes (17/1) und ein unteres Träger-Teil (17/2) aufgelöst ist.

5. Lastkraftwagen nach Anspruch 4, dadurch gekennzeichnet, daß die beiden jeweils unteren Träger-Teile (17/2) des zweiten, mittleren Moduls (2) sich in Verlängerung der beiden, eine Tieferlegung des Antriebsaggregates (6) und Fahrerhauses (7) ermöglichenden, tiefergelegten Längsträger-Abschnitte (16) des ersten Moduls (1) erstrecken, auf einem Höhen-Niveau (H4) zwischen Fahrbahn und deren Oberkanten, das demjenigen (H3) einer Pkw-Stoßstange entspricht oder geringfügig darüber liegt.

6. Lastkraftwagen nach einem der Ansprüche 4 und 5, dadurch gekennzeichnet, daß das obere Träger-Teil (17/2) des mittleren Moduls (2) jeweils unmittelbar über dem zugehörigen unteren Träger-Teil (17/2) parallel verlaufend angeordnet und mit diesem verbunden ist.

7. Lastkraftwagen nach einem der Ansprüche 4 und 5, dadurch gekennzeichnet, daß die je Seite beiden Träger-Teile (17/1, 17/2) des mittleren Moduls (2) mit größerem Abstand übereinander und in Längsrichtung im wesentlichen parallel verlaufend angeordnet sind.

8. Lastkraftwagen nach Anspruch 6, dadurch gekennzeichnet, daß das jeweils obere Träger-Teil (17/1) des mittleren Moduls (2) das zugehörige untere Träger-Teil (17/2) vorne überragt, welcher Trägerteil-Abschnitt (19) bei Verbindung der beiden Module (1, 2) dasjeweils am vorderen Modul (1) gegebene Träger-Teil (16) oben überlappt und dort an diesen befestigt ist.

9. Lastkraftwagen nach Anspruch 4, dadurch gekennzeichnet, daß am hinteren Ende jedes Längsträger-Abschnittes (16) des vorderen Moduls (1) eine Vertikalgabelung (22) mit oberem Gabelteil (22/1), an dem sich das obere Träger-Teil (17/1) des mittleren Moduls (2) anschließt, und unterem Gabelteil (22/2), an dem sich das untere Träger-Teil (17/2) des mittleren Moduls (2) anschließt, gegeben ist.

10. Lastkraftwagen nach Anspruch 9, dadurch gekennzeichnet, daß im vorderen Modul (1) die Vertikalgabelung (22) am hinteren Ende jedes solchen Längsträger-Abschnittes (16) gegeben ist, der zur Tieferlegung des Antriebsaggregates (6) und des Fahrerhauses (7) zumindest partiell auf ein gegenüber dem Höhen-Niveau (H5) der oberen Träger-Teile (17/1) niedrigeres Höhen-Niveau (H4 = 0,6 - 0,9 H5) abgesenkt und gegebenenfalls - zur Bildung eines V-förmigen Einbauraumes für das Antriebsaggregat (6) - auch von der Vertikalen abweichend schräg gestellt und mit den direkten Anschluß von Achsanlenkungs- bzw. Einzelradaufhängungsorganen ermöglichenden Ein- und Ausbuchtungen versehen ist.

11. Lastkraftwagen nach Anspruch 9, dadurch gekennzeichnet, daß die je Seite beiden Träger-Teile (17/1, 17/2) des mittleren Moduls (2) mit Abstand übereinander und in Längsrichtung im wesentlichen parallel verlaufend angeordnet sind.

12. Lastkraftwagen nach einem oder mehreren der Ansprüche 9 bis 11, dadurch gekennzeichnet, daß eines der im mittleren Modul (2) gegebenen unteren Träger-Teile (17/2) soweit nach unten verlegt ist, daß zwischen diesem und dem zugehörigen oberen Träger-Teil (17/1) ein Ersatzrad (23) quer einbaubar ist.

13. Lastkraftwagen nach einem oder mehreren der Ansprüche 9 bis 11, dadurch gekennzeichnet, daß die beiden je Seite gegebenen Träger-Teile (17/1, 17/2) des mittleren Moduls (2) zur Struktur-Versteifung durch wenigstens eine Strebe (27) miteinander verbunden sind.

14. Lastkraftwagen nach Anspruch 13, dadurch gekennzeichnet, daß die beiden je Seite gegebenen Träger-Teile (17/1, 17/2) des mittleren Moduls (2) einschließlich der Strebe(n) (27) als einstückiges Blechpreßteil realisiert sind.

15. Lastkraftwagen nach einem der Ansprüche 4 und 9 bis 14, dadurch gekennzeichnet, daß die beiden je Seite im mittleren Moduls (2) gegebenen Träger-Teile (17/1, 17/2) unterschiedliche Querschnitte aufweisen.

16. Lastkraftwagen nach Anspruch 15, dadurch gekennzeichnet, daß das jeweils querschnittsstärkere Träger-Teil (17/1 bzw. 17/2) wahlweise das untere oder obere ist.

17. Lastkraftwagen nach einem der Ansprüche 4 und 9 bis 14, dadurch gekennzeichnet, daß beiden je Seite im mittleren Modul (2) gegebenen Träger-Teile (17/1, 17/2) den gleichen Querschnitt haben.

18. Lastkraftwagen nach einem oder mehreren der Ansprüche 4 bis 17, dadurch gekennzeichnet, daß die jeweils oberen Träger-Teile (17/1) und jeweils unteren Träger-Teile (17/2) im mittleren Modul (2) jeweils über wenigstens einen, vorzugsweise jedoch mehrere Querträger (28, 29) miteinander verbunden sind.

19. Lastkraftwagen nach Anspruch 18, dadurch gekennzeichnet, daß zwei jeweils übereinander angeordnete Querträger (28, 29) direkt oder über ein Zwischenstück (30) miteinander verbunden sind.

20. Lastkraftwagen nach Anspruch 18, dadurch gekennzeichnet, daß zwei jeweils übereinander angeordnete Querträger (28, 29) zusammen mit diese verbindende Verstrebungen (31) durch ein Blechpreßteil realisiert sind.

21. Lastkraftwagen nach einem oder mehreren der vorhergehenden Ansprüche, dadurch gekennzeichnet, daß an den einander zugewandten Enden der Längsträger-Abschnitte (16, 17, 18) der miteinander zu verbindenden Module (1, 2, 3) geeignete Anschlußorgane wie Anschlußplatten bzw. -flansche (35, 36) mit Vorkehrungen für die Durchführung der Schraub- oder Nietverbindungen vorgesehen sind.

22. Lastkraftwagen nach einem oder mehreren der Ansprüche 4 bis 17, dadurch gekennzeichnet, daß an beiden, an einer Fahrzeugseite im mittleren Modul (2) gegebenen Träger-Teilen (17/1, 17/2) außen Winkelhalter (26) mit ihren Vertikalschenkeln (26/1) angebracht, vorzugsweise angeschraubt sind, die als Träger für Kraftstoff- und/oder Druckluftbehälter (11), Batteriekästen, Staukästen und dergleichen dienen.

23. Lastkraftwagen nach einem oder mehreren der Ansprüche 4 bis 22, dadurch gekennzeichnet, daß an beiden je Fahrzeugseite im mittleren Modul (2) gegebenen Träger-Teilen (17/1, 17/2) seitliche Unterfahrschutzschilde (37) tragende Halter (38, 39, 40) angebracht sind.

24. Lastkraftwagen nach Anspruch 23, dadurch gekennzeichnet, daß die seitlichen Unterfahrschutzschilde (37) über quer nachgiebige Energieabsorber (41, 42, 43) an den Haltern (38, 39, 40) abgestützt sind.

25. Lastkraftwagen nach einem oder mehreren der vorhergehenden Ansprüche, dadurch gekennzeichnet, daß im vorderen Modul (1) jeder Längsträger-Abschnitt (16) an seinem vorderen Endbereich eine Vertikal-Gabelung (45) aufweist, an deren unterem Gabel-Teil (45/1) vorne über einen oder mehrere in Höhe (H3) einer Pkw-Stoßstange angeordnete(n) Energieabsorber (46) ein Stoßfänger (47) abgestützt ist, während das obere Gabel-Teil (45/2) in einer etwas über dem Normal-Niveau einer Pkw-Motorhaube gegebenen Höhe (H2) endet und untenseitig so gestaltet ist, daß ein frontal aufprallender Pkw in diese im übrigen bauteil- bzw. aggregatfreie oder zumindest bauteil- bzw. aggregatarm und dann nur mit längsweich am Rahmen befestigten Bauteilen/Aggregaten ausgestattete vordere Nutzfahrzeug-Knautschzone eindringen kann, wobei durch den/die Energieabsorber (46) die Aufprallenergie verzehrt wird.

26. Lastkraftwagen nach einem oder mehreren der vorhergehenden Ansprüche, dadurch gekennzeichnet, daß im hinteren Modul (3) der dortige Rahmenabschnitt durch zwei Längsträger-Abschnitte (18) gebildet ist, die sich mit Oberkante auf Rahmenhöhe (H5) erstrecken sowie über wenigstens einen Querträger (32) miteinander verbunden sind und an denen vorzugsweise außen Lagerschilde (33, 34) für die Anlenkung von Hinterachsaufhängungsorganen und frontseitig Anschlußorgane (35), beispielsweise Flansche oder Platten, für die Verbindung mit dem im mittleren Modul (2) gegebenen Rahmen-Mittelteil angeordnet sind.

27. Lastkraftwagen nach Anspruch 26, dadurch gekennzeichnet, daß die im hinteren Modul (3) gegebenen Längsträger-Abschnitte (18) bis auf Höhe (H3) einer Pkw-Stoßstange nach unten gezogen sind, und daß eine Rammschutzleiste (49) oder eine das Heck aerodynamisch umgebende Verkleidungsblende (50) über wenigstens einen in Längsrichtung nachgiebigen Energieabsorber (51) an den hinteren Enden der heruntergezogenen Längsträger-Abschnitte (18) abgestützt ist, somit bei einem Aufprall eines Pkw dieser in die solchermaßen gestaltete hintere Nutzfahrzeug-Knautschzone eindringen kann und dabei durch den/die Energieabsorber (51) die Aufprall-Energie verzehrbar ist.

## Claims

1. A lorry, more particularly of the forward control type, comprising a chassis of modular construction, the first, front module (1) consisting of a chassis/frame front part (4) with two longitudinal member sections (16) connected by means of cross-members, and mounted thereon, the front axle(s) (5), drive unit (6), driver's cab (7) and other units/mounted parts usually located in the front region of the lorry, the remaining rear chassis which carries tanks for fuel and compressed air as well as other components and which is connected to the rear axle(s) being joined to the said front module (1), wherein all the chassis modules (1, 2, 3) of the lorry may, to a very great extent, each be separately pre-assembled, then put together and are joined together on the frame side by way of screwed or riveted connections, characterized in that the remaining rear chassis is also subdivided into two modules, a middle one (2) and a rear one (3), wherein
- the middle module (2) consists of a chassis/frame middle part (10) with two longitudinal member sections (17) connected by means of cross-members, and mounted thereon, the fuel and compressed air tanks (11, 44) as well as other components/mounted parts usually located in the middle section of a lorry, and
- the rear module (3) consists of a chassis/frame rear part (12) with two longitudinal member sections (18) connected by means of cross-members, and mounted thereon, the rear axle(s) (13) and other mounted components usually located in the rear section of a lorry.

2. A lorry according to claim 1, characterized in that the longitudinal member sections (16, 17, 18) of all three modules (1, 2, 3) are arranged with their top edges essentially in one plane.

3. A lorry according to claim 2, characterized in that, to enable the drive unit (6) and the driver's cab (7) to be lowered, the longitudinal member sections (16, 17, 18) are arranged in a lower plane in comparison with conventional lorries, the height (H4) thereof between the roadway and the top edge of the frame being at the height (H3) of a motor vehicle bumper or slightly above.

4. A lorry according to claim 1, characterized in that each of the two longitudinal member sections (17) of the second, middle module (2), approximately from the rear wall (20) of the driver's cab onwards, is split into an upper (17/1) and a lower member part (17/2).

5. A lorry according to claim 4, characterized in that the two respectively lower member parts (17/2) of the second, middle module (2) extend as a prolongation of the two longitudinal member sections (16) of the first module (1), which are lowered and which enable the drive unit (6) and the driver's cab (7) to be lowered, at a height (H4) between the roadway and their top edges which corresponds to the height (H3) of a motor vehicle bumper or lies slightly above.

6. A lorry according to one of claims 4 and 5, characterized in that each upper member part (17/2) of the middle module (2) is arranged extending parallel immediately above the associated lower member part (17/2) and is connected thereto.

7. A lorry according to one of claims 4 and 5, characterized in that the two member parts (17/1, 17/2) each side of the middle module (2) are arranged one above the other at a greater distance apart and extending substantially parallel in the longitudinal direction.

8. A lorry according to claim 6, characterized in that each upper member part (17/1) of the middle module (2) projects forwardly beyond the associated lower member part (17/2), this member part section (19) upwardly overlapping the respective member part (16) located in the front module (1) when the two modules (1, 2) are joined, and there being fixed to that member part.

9. A lorry according to claim 4, characterized in that at the rear end of each longitudinal member section (16) of the front module (1) there is a vertical bifurcation (22) with an upper fork part (22/1) to which the upper member part (17/1) of the middle module (2) is joined, and a lower fork part (22/2) to which the lower member part (17/2) of the middle module (2) is joined.

10. A lorry according to claim 9, characterized in that in the front module (1), the vertical bifurcation (22) is located at the rear end of each longitudinal member section (16) which, in order to lower the drive unit (6) and the driver's cab (7), is lowered at least partially to a lower height (H4 = 0.6 - 0.9 H5) in relation to the height (H5) of the upper member parts (17/1) and - to form a V-shaped installation space for the drive unit (6) - is also optionally set at an angle away from the vertical and is provided with indentations and projections permitting the direct connection of axle coupling suspension elements or single wheel suspension elements.

11. A lorry according to claim 9, characterized in that the two member parts (17/1, 17/2) each side of the middle module (2) are arranged one above the other at a distance apart and extend substantially parallel in the longitudinal direction.

12. A lorry according to one or more of claims 9 to 11, characterized in that one of the lower member parts (17/2) located in the middle module (2) is relocated far down enough to enable a spare wheel (23) to be installed transversely between it and the associated upper member part (17/1).

13. A lorry according to one or more of claims 9 to 11, characterized in that the two member parts (17/1, 17/2) each side of the middle module (2) are joined together by means of at least one strut (27) in order to reinforce the structure.

14. A lorry according to claim 13, characterized in that the two member parts (17/1, 17/2) each side of the middle module (2) including the strut(s) (27) are produced as a single-piece pressed sheet metal part.

15. A lorry according to one of claims 4 and 9 to 14, characterized in that the two member parts (17/1, 17/2) each side in the middle module (2) have different cross-sections.

16. A lorry according to claim 15, characterized in that the member part (17/1 or 17/2) with the thicker cross-section is optionally the lower or the upper one.

17. A lorry according to one of claims 4 and 9 to 14, characterized in that the two member parts (17/1, 17/2) each side in the middle module (2) have the same cross-section.

18. A lorry according to one or more of claims 4 to 17, characterized in that each of the upper member parts (17/1) and each of the lower member parts (17/2) in the middle module (2) are joined together by way of at least one, but preferably several, cross-members (28, 29).

19. A lorry according to claim 18, characterized in that each two cross-members (28, 29) arranged one above the other are joined together directly or by way of an intermediate piece (30).

20. A lorry according to claim 18, characterized in that each two cross-members (28, 29) arranged one above the other, together with reinforcements (31) connecting them, are produced from a pressed sheet metal part.

21. A lorry according to one or more of the preceding claims, characterized in that at the mutually facing ends of the longitudinal member sections (16, 17, 18) of the modules (1, 2, 3) to be joined together, suitable connecting elements are provided such as connecting plates or flanges (35, 36) with provision, for the passage therethrough of the screwed or riveted connections.

22. A lorry according to one or more of claims 4 to 17, characterized in that angular holders (26) are attached, preferably screwed, by their vertical sidepieces (26/1) to the outside of the two member parts (17/1, 17/2) located on one vehicle side in the middle module (2), the said angular holders serving as supports for fuel and/or compressed air tanks (11), battery containers, storage containers and the like.

23. A lorry according to one or more of claims 4 to 22, characterized in that holders (38, 39, 40) supporting lateral drive-under guard plates (37) are attached to the two member parts (17/1, 17/2) each vehicle side in the middle module (2).

24. A lorry according to claim 23, characterized in that the lateral drive-under guard plates (37) are supported on the holders (38, 39, 40) by means of transversely yielding energy absorbers (41, 42, 43).

25. A lorry according to one or more of the preceding claims, characterized in that in the front module (1) each longitudinal member section (16) has a vertical bifurcation (45) at its front end region, a bumper (47) being supported at the front of the lower fork part (45/1) thereof by means of one or more energy absorbers (46) arranged at the height (H3) of a motor vehicle bumper, while the upper fork part (45/2) ends at a height (H2) slightly above the normal level of a motor vehicle bonnet and is shaped on the underside such that a motor vehicle hitting it frontally may penetrate into this commercial vehicle front crumple zone, which is otherwise free of components or units, or at least has few components or units and is then only provided with components/units fixed to the frame so as to yield longitudinally, the impact energy being dissipated by the energy absorber(s) (46).

26. A lorry according to one or more of the preceding claims, characterized in that in the rear module (3) the frame section located there is formed by two longitudinal member sections (18) which extend with their top edge at frame height (H5) and which are joined together by at least one cross-member (32) and preferably on the outside of which there are arranged bearing plates (33, 34) for coupling rear axle suspension elements, and at the front connection elements (35), flanges or plates for example, for the connection to the frame middle part located in the middle module (2).

27. A lorry according to claim 26, characterized in that the longitudinal member sections (18) located in the rear module (3) are drawn downwards to the height (H3) of a motor vehicle bumper, and in that a ram-protection bar (49) or a covering panel (50) aerodynamically enclosing the rear is supported on the rear ends of the drawn-down longitudinal member sections (18) by way of at least one energy absorber (51) which yields in the longitudinal direction, and thus in the event of an impact by a motor vehicle, the latter can penetrate into the commercial vehicle rear crumple zone shaped in this way and the impact energy may thus be dissipated by the energy absorber(s) (51).

## Revendications

1. Camion notamment à cabine avancée comprenant un châssis de construction modulaire, dont le premier module (1), avant se compose d'une partie avant de cadre de châssis (4) avec deux segments de longeron (16) reliés par des traverses et portant le ou les essieux avant (5), le groupe moteur (6), la cabine (7) et les autres équipements-accessoires usuels de la zone avant d'un camion, ce module avant (1) étant suivi par la partie restante (1) du châssis, équipée du réservoir de carburant et du réservoir d'air comprimé ainsi que d'autres équipements, et le ou les essieux arrière, tous les modules de châssis (1, 2, 3) du camion étant dans une très large mesure pré-assemblés séparément puis réunis et reliés du côté des cadres par des liaisons à vis ou à rivets, caractérisé en ce que la partie restante, arrière, du châssis est également subdivisée en deux modules, un module médian (2) et un module arrière (3),
- le module médian (2) se compose d'une partie médiane de cadre de châssis (10) avec deux segments de longeron (17) reliés par des traverses, équipé du réservoir de carburant du réservoir d'air comprimé (11, 44) ainsi que des autres équipements et ou composants usuels dans la partie médiane d'un camion,
- le module arrière (3) se compose de la partie arrière (12) du cadre de châssis formée de deux segments de longeron (18) reliés par des traverses et portant le ou les essieux arrière (13) ainsi que les autres équipements ou composants usuels de la partie arrière d'un camion.

2. Camion selon la revendication 1, caractérisé en ce que les segments de longeron (16, 17, 18) de tous les trois modules (1, 2, 3) ont leurs bords supérieurs situés essentiellement dans un plan.

3. Camion selon la revendication 2, caractérisé en ce que les segments de longeron (16, 17, 18) sont prévus dans un plan situé plus bas que celui d'un camion usuel, pour permettre d'abaisser le groupe moteur (6) et la cabine (7), la hauteur (4) de ce plan, comprise entre la chaussée et le bord supérieur du cadre étant égale ou légèrement supérieure à la hauteur (H3) d'un pare-chocs de véhicule de tourisme.

4. Camion selon la revendication 1, caractérisé en ce que chacun des deux segments de longeron (17) du second module (module médian 2) est résolu en une partie supérieure (17/1) et une partie inférieure (17/2) de longeron sensiblement à partir de la paroi arrière (20) de la cabine.

5. Camion selon la revendication 4, caractérisé en ce que les deux parties inférieures de longeron (17/2) respectives du second module (2) (module médian) se situent dans le prolongement des deux segments de longeron (16), bas, premier module (1), permettant d'abaisser le groupe moteur (6) et la cabine (7), à une hauteur (H4) prise entre la chaussée et le bord supérieur des parties de longeron, qui correspond à la hauteur (H3) d'un pare-chocs de véhicule de tourisme ou est légèrement supérieure à cette hauteur.

6. Camion selon l'une des revendications 4 à 5, caractérisé en ce que la partie supérieure (17/2) du module médian (2) est prévue directement au-dessus de la partie inférieur de longeron (17/1) correspondante, parallèlement à celui-ci et en étant reliée à celui-ci.

7. Camion selon l'une des revendications 4 à 5, caractérisé en ce que les deux parties de longeron (17/1, 17/2) de chaque côté, du module médian (2) sont situées l'une au-dessus de l'autre à une distance relativement importante en étant essentiellement parallèles dans la direction longitudinale.

8. Camion selon la revendication 6, caractérisé en ce que la partie supérieure respective (17/1) du module médian (2) dépasse de l'avant de la partie inférieure correspondante (17/2) de longeron, d'un segment de longeron (19) qui à la liaison des deux modules (1, 2) chevauche la partie de longeron (16) du module avant (1) et est fixée à cette partie.

9. Camion selon la revendication 4, caractérisé en ce que l'extrémité arrière de chaque segment de longeron (16) du module avant (1) se poursuit par une fourche verticale (22) comprenant une partie supérieure de fourche (22/1) à laquelle est reliée la partie supérieure de longeron (17/1) du module médian (2) et d'une partie inférieure de fourche (22/2) à laquelle est reliée la partie inférieure de longeron (17/2) du module médian (2).

10. Camion selon la revendication 9, caractérisé en ce que dans le module avant (1), la fourche verticale (22) est prévue à l'extrémité arrière d'un segment de longeron (16) abaissé au moins partiellement à un niveau (H4) (égal à 0,6-0,9 H5) plus bas que le niveau (H5) de la partie supérieure de longeron (17/1), pour abaisser le groupe moteur (6) et la cabine (7), et le cas échéant en étant également disposé en biais par rapport à la direction verticale pour former un volume d'installation en (V) recevant le groupe moteur (6), avec des déformations concaves et convexes permettant de relier directement des organes d'articulation d'essieux ou de suspensions de roues indépendantes.

11. Camion selon la revendication 9, caractérisé en ce que de chaque côté les deux parties de longeron (17/1, 17/2) du module médian (2) sont superposées avec intervalle et essentiellement parallèlement dans la direction longitudinale.

12. Camion selon l'une ou plusieurs des revendications 9 à 11, caractérisé en ce que la partie de longeron (17/1), inférieure, du module médian (2) est décalée vers le bas suffisamment pour qu'entre cette partie et la partie supérieure de longeron (17/1) correspondante on puisse insérer transversalement une roue de secours (23).

13. Camion selon l'une ou plusieurs des revendications 9 à 11, caractérisé en ce que les deux parties de longeron (17/1, 17/2) de chaque côté du module médian (2) sont reliées par au moins une entretoise (27) pour rigidifier la structure.

14. Camion selon la revendication 13, caractérisé en ce que les deux parties de longeron (17/1, 17/2) de chaque côté, du module médian (2) y compris la ou les entretoises (27) sont réalisées en une seule pièce de tôle pressée.

15. Camion selon l'une des revendications 4 et 9 à 14, caractérisé en ce que les deux parties de longeron (17/1, 17/2) de chaque côté du module médian (2) ont des sections différentes.

16. Camion selon la revendication 15, caractérisé en ce que la partie de longeron (17/1 ou 17/2) de plus forte section est au choix la partie supérieure ou la partie inférieure.

17. Camion selon l'une des revendications 4 et 9 à 14, caractérisé en ce que les deux parties de longeron (17/1, 17/2) de chaque côté du module médian (2) ont la même section.

18. Camion selon une ou plusieurs des revendications 4 à 17, caractérisé en ce que les parties supérieures respectives de longeron (17/1) et les parties inférieures respectives de longeron (17/2) du module médian (2) sont reliées respectivement par une et de préférence toutefois plusieurs traverses (28, 29).

19. Camion selon la revendication 18, caractérisé en ce que deux traverses (28, 29) respectivement superposées sont reliées directement ou par une pièce intermédiaire (30).

20. Camion selon la revendication 18, caractérisé en ce que deux traverses (28, 29) respectivement superposées, sont réalisées avec les entretoises qui les relient (31) sous la forme d'une pièce de tôle pressée.

21. Camion selon une ou plusieurs des revendications précédentes, caractérisé en ce que les extrémités des segments de longeron (16, 17, 18) tournées l'une vers l'autre des modules à relier (1, 2, 3), sont munies d'organes de raccordement tels que des plaques de raccordement ou des brides (35, 36) avec des moyens pour réaliser des liaisons à vis ou à rivets.

22. Camion selon une ou plusieurs des revendications 4 à 17, caractérisé en ce que les deux parties de longeron (17/1, 17/2) d'un côté du véhicule, du module médian (2) comportent extérieurement des consoles (26) fixées par leurs branches verticales (26/1) de préférence par une vis, et servant de support pour le réservoir de carburant et/ou le réservoir d'air comprimé (11), le caisson logeant les batteries, le caisson de stockage ou moyens analogues.

23. Camion selon une ou plusieurs des revendication 4 à 22, caractérisé en ce que les deux parties de longeron (17/1, 17/2) prévues de chaque côté du véhicule, sur le module médian (2), il y a des supports (38, 39, 40) portant des écrans latéraux de protection contre l'encastrement (37).

24. Camion selon la revendication 23, caractérisé en ce que les écrans latéraux de protection contre l'encastrement (37) s'appuient sur les supports (38, 39, 40) par des dispositifs absorbant l'énergie (41, 42, 43) souples dans la direction transversale.

25. Camion selon une ou plusieurs des revendications précédentes, caractérisé en ce que chaque segment de longeron (16) du module avant (1) comporte dans sa zone d'extrémité avant une fourche verticale (45) dont la partie inférieure de fourche (45/1) porte à l'avant un pare-chocs (47) à la hauteur (H3) d'un pare-chocs de véhicule de tourisme par l'intermédiaire d'un ou plusieurs dispositifs absorbant l'énergie (46) alors que la partie supérieure de fourche (45/2) se termine sensiblement au-dessus du niveau normal d'un capot de véhicule de tourisme, à une hauteur (H2), et sa face inférieure est conçue pour qu'un véhicule de tourisme effectuant une collision frontale, puisse pénétrer dans cette zone avant d'écrasement du véhicule utilitaire, qui ne comporte pas d'équipements ou d'accessoires ou du moins n'en comporte que très peu et alors seulement, fixés par des moyens de liaison souples dans la direction longitudinale, le ou les dispositifs absorbant l'énergie (46) dissipant l'énergie de la collision.

26. Camion selon une ou plusieurs des revendications précédentes, caractérisé en ce que dans le module arrière (3), le segment de cadre correspondant est formé par deux segments de longeron (18) dont le bord supérieur se situe à la hauteur (H5) du cadre et qui sont reliés par au moins une traverse (32) et portent de préférence extérieurement des panneaux de palier (33, 34) pour l'articulation des organes de suspension de l'essieu arrière et frontalement des organes de raccordement (35) par exemple des brides ou des plaques pour la liaison avec la partie médiane de cadre du module médian (2).

27. Camion selon la revendication 26, caractérisé en ce que les segments de longeron (18) du module arrière (3) sont abaissés jusqu'à la hauteur (H3) d'un pare-chocs de véhicule de tourisme et un longeron de protection contre les chocs (49) ou un écran d'habillage aérodynamique (50) pour l'arrière est appuyé par au moins un dispositif d'absorption d'énergie, souple dans la direction longitudinale, à l'extrémité arrière des segments de longeron (18), abaissés, pour qu'en cas de collision avec un véhicule de tourisme, celui-ci puisse pénétrer dans la zone d'écrasement arrière du véhicule utilitaire et dissipe l'énergie de la collision par le ou les dispositifs absorbant l'énergie (51).
